(19)

Europäisches
Patentamt
European
Patent Office
Office européen
des brevets

(11) **EP 4 009 079 A1**

(12) **EUROPEAN PATENT APPLICATION**

(43) Date of publication:
**08.06.2022 Bulletin 2022/23**

(51) International Patent Classification (IPC):
**G01S 17/89** (2020.01)   **G06T 15/04** (2011.01)

(21) Application number: **21209280.3**

(52) Cooperative Patent Classification (CPC):
**G01S 7/4817; G01S 17/894; G06T 15/04**

(22) Date of filing: **19.11.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.12.2020 US 202063120373 P
26.08.2021 US 202117412793**

(71) Applicant: **Faro Technologies, Inc.
Lake Mary, FL 32746-6204 (US)**

(72) Inventors:
• **KAABI, Hani
70825 Korntal-Münchingen (DE)**
• **PARIAN, Jafar Amiri
70825 Korntal-Münchingen (DE)**

(74) Representative: **Harris, Oliver John Richard
Novagraaf UK
Centrum
Norwich Research Park
Colney Lane
Norwich NR4 7UG (GB)**

(54) **MULTI-BAND ATTRIBUTE BLENDING IN THREE-DIMENSIONAL SPACE**

(57)     A method includes mapping attribute information from a sensor with 3D coordinates from a 3D measurement device, wherein the mapping comprises blending the attribute information to avoid boundary transition effects. The blending includes representing the 3D coordinates that are captured using a plurality of voxel grids. The blending further includes converting the plurality of voxel grids to a corresponding plurality of multi-band pyramids, wherein each multi-band pyramid comprises a plurality of levels, each level storing attribute information for a different frequency band. The blending further includes computing a blended multi-band pyramid based on the plurality of voxel grids by combining corresponding levels from each of the multi-band pyramids. The blending further includes converting the blended multi-band pyramid into a blended voxel grid. The blending further includes outputting the blended voxel grid.

FIG. 15

EP 4 009 079 A1

**Description**

This application claims the benefit of U.S. Provisional Application Serial No. 63/120,373, filed December 2, 2020, the entire disclosure of which is incorporated herein by reference.

BACKGROUND

The subject matter disclosed herein relates to using a three-dimensional (3D) laser scanner time-of-flight (TOF) coordinate measurement device used in conjunction with a camera. A 3D laser scanner of this type steers a beam of light to a non-cooperative target, such as a diffusely scattering surface of an object. A distance meter in the device measures a distance to the object, and angular encoders measure the angles of rotation of two axles in the device. The measured distance and two angles enable a processor in the device to determine 3D points and the 3D coordinates of the target. In conjunction, the camera captures images that are used as textures of the 3D points that are captured.

A TOF laser scanner is a scanner in which the distance to a target point is determined based on the speed of light in the air between the scanner and a target point. Laser scanners are typically used for scanning closed or open spaces such as interior areas of buildings, industrial installations, and tunnels. They may be used, for example, in industrial applications and accident reconstruction applications. A laser scanner optically scans and measures objects in a volume around the scanner through the acquisition of data points representing object surfaces within the volume. Such data points are obtained by transmitting a beam of light onto the objects and collecting the reflected or scattered light to determine the distance, two-angles (i.e., azimuth and a zenith angle), and optionally a gray-scale value. This raw scan data is collected, stored, and sent to a processor or processors to generate a 3D image representing the scanned area or object.

Generating an image requires at least three values for each data point. These three values may include the distance and two angles or maybe transformed values, such as the x, y, z coordinates. In an embodiment, an image is also based on a fourth gray-scale value, which is a value related to the irradiance of scattered light returning to the scanner.

Most TOF scanners direct the beam of light within the measurement volume by steering the light with a beam steering mechanism. The beam steering mechanism includes a first motor that steers the beam of light about a first axis by a first angle that is measured by a first angular encoder (or another angle transducer). The beam steering mechanism also includes a second motor that steers the beam of light about a second axis by a second angle that is measured by a second angular encoder (or another angle transducer).

Many contemporary laser scanners include a color camera mounted on the laser scanner to gather digital images of the environment and present the digital images to an operator of the laser scanner. By viewing the camera images, the operator of the scanner can determine the field of view of the measured volume and adjust settings on the laser scanner to measure over a larger or smaller region of space. In addition, the digital images may be transmitted to a processor to add color to the scanner image. To generate a color scanner image, at least three positional coordinates (such as x, y, z) and three color values (such as red, green, blue "RGB") are collected for each data point.

These images are combined to provide one or more textures for the captured 3D points to more accurately represent the environment. 3D reconstruction of a scene may require multiple image captures from different positions of the laser scanner. Lighting conditions often change between positions causing variation in one or more factors of the images that are captured to depict the target scene.

Accordingly, while existing 3D scanners are suitable for their intended purposes, what is needed is a 3D scanner having certain features of embodiments of the present disclosure.

BRIEF DESCRIPTION

According to one or more embodiments, a system includes a three-dimensional (3D) measurement device that captures a plurality three-dimensional (3D) coordinates corresponding to one or more objects scanned in a surrounding environment. The system also includes a sensor that captures attribute information of the one or more objects scanned in the surrounding environment. Further, the system includes one or more processors that map the attribute information from the sensor with the 3D coordinates from the 3D measurement device, wherein the mapping includes blending the attribute information to avoid boundary transition effects. The blending is performed using a method that includes representing the 3D coordinates that are captured using a plurality of voxel grids. The method further includes converting the plurality of voxel grids to a corresponding plurality of multi-band pyramids, wherein each multi-band pyramid comprises a plurality of levels, each level storing attribute information for a different frequency band. The method further includes computing a blended multi-band pyramid based on the plurality of voxel grids by combining corresponding levels from each of the multi-band pyramids. The method further includes converting the blended multi-band pyramid into a blended voxel grid. The method further includes outputting the blended voxel grid.

According to one or more embodiments, a method includes capturing, by a 3D measurement device, three-dimensional (3D) coordinates corresponding to one or more objects in a surrounding environment. The method further includes capturing, by a sensor, attribute information of the one or more objects in the surrounding environment. The method further includes mapping, by one or more processors, the attribute information from the sensor with the 3D coordinates from the 3D measurement device, wherein the mapping comprises blending the attribute information to avoid boundary transition effects. The blending includes representing the 3D coordinates that are captured using a plurality of voxel grids. The blending further includes converting the plurality of voxel grids to a corresponding plurality of multi-band pyramids, wherein each multi-band pyramid comprises a plurality of levels, each level storing attribute information for a different frequency band. The blending further includes computing a blended multi-band pyramid based on the plurality of voxel grids by combining corresponding levels from each of the multi-band pyramids. The blending further includes converting the blended multi-band pyramid into a blended voxel grid. The blending further includes outputting the blended voxel grid.

According to one or more embodiments, a computer program product includes a memory device with computer executable instructions stored thereon, the computer executable instructions when executed by one or more processors cause the one or more processors to perform a method. The method includes capturing, by a 3D measurement device, three-dimensional (3D) coordinates corresponding to one or more objects in a surrounding environment. The method further includes capturing, by a sensor, attribute information of the one or more objects in the surrounding environment. The method further includes mapping, by one or more processors, the attribute information from the sensor with the 3D coordinates from the 3D measurement device, wherein the mapping comprises blending the attribute information to avoid boundary transition effects. The blending includes representing the 3D coordinates that are captured using a plurality of voxel grids. The blending further includes converting the plurality of voxel grids to a corresponding plurality of multi-band pyramids, wherein each multi-band pyramid comprises a plurality of levels, each level storing attribute information for a different frequency band. The blending further includes computing a blended multi-band pyramid based on the plurality of voxel grids by combining corresponding levels from each of the multi-band pyramids. The blending further includes converting the blended multi-band pyramid into a blended voxel grid. The blending further includes outputting the blended voxel grid.

These and other advantages and features will become more apparent from the following description taken in conjunction with the drawings.

BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 is a perspective view of a laser scanner in accordance with an embodiment;

FIG. 2 is a side view of the laser scanner illustrating a method of measurement according to an embodiment;

FIG. 3 is a schematic illustration of the optical, mechanical, and electrical components of the laser scanner according to an embodiment;

FIG. 4 illustrates a schematic illustration of the laser scanner of FIG. 1 according to an embodiment;

FIG. 5 is a flow diagram of a method of generating enhanced color scans with the laser scanner of FIG. 1;

FIG. 6 depicts a flowchart of a method for mapping the 2D images with the 3D coordinates with multi-band blending according to one or more embodiments;

FIG. 7 depicts an example voxel grid;

FIG. 8 depicts a multi-band pyramid;

FIG. 9 depicts a flowchart of a method for converting a voxel grid to a multi-band pyramid according to one or more embodiments;

FIG. 10 shows a visual representation of converting a voxel grid to a multi-band pyramid according to one or more embodiments;

FIG. 11 depicts a flowchart of a method for converting a multi-band pyramid into a voxel grid according to one or more embodiments;

FIG. 12 depicts a visual representation of the operations for blending attributes of multiple input voxel grids *(V1, V2)* into a single color-blended output voxel grid (B) according to one or more embodiments;

FIG. 13 depicts a flowchart for combining input voxel grids into a single blended output voxel grid according to one or more embodiments;

FIG. 14 depicts a flowchart of a method for mapping the 2D images with the 3D coordinates with multi-band blending according to one or more embodiments;

FIG. 15 depicts a visual representation of the operations performed in the method of FIG. 14;

FIG. 16 depicts examples of multi-band blending of the color attribute output according to one or more embodiments; and

FIG. 17 depicts examples of multi-band blending of the color attribute output according to one or more embodiments.

The detailed description explains embodiments of the invention, together with advantages and features, by way of example with reference to the drawings.

DETAILED DESCRIPTION

Embodiments herein relate to a 3D measuring device having a 3D scanner and at least one camera that captures color images. The camera(s) can include a wide-angle lens in one or more embodiments. Embodiments provide advantages to acquiring three-dimensional (3D) coordinates of an area of the environment, acquiring a 2D color image of that area using the camera, and mapping the 2D wide-angle image to the 3D coordinates. The result is an interactive 3D scan of the area that includes the captured 3D coordinates and color.

3D reconstruction of a scene, typically, requires multiple captures from different positions relative to the scene to capture data (3D coordinates, images, etc.) of different portions of the target scene. However, various conditions, such as lighting conditions change between the different positions from which the data is captured. Such changes can be due to various factors, such as changes in viewing direction from each position, changes in the direction, intensity, or color temperature of the light source, changes in direction, intensity, or color temperature of reflected/refracted light from one or more objects in the target scene, etc. The result of the variation in the lighting conditions in the images captured from the different positions is a variation in brightness, contrast, white balance, shadows, and other attributes in the captured color data from the respective different positions. Such variations adversely affect the quality of the resulting data that is captured by the 3D measuring device. Such variations can affect attributes like color, brightness, contrast, etc. that are associated 3D data that is captured using various techniques/devices including 3D laser scanners (colorized by photos), photogrammetry, and in any other data capture method that relies on passive information, such as passive light sources. The incorrect attributes, such as incorrect colorization, of the 3D data results in a scene to be rendered that is not only visually displeasing, but also imprecise. In applications, such as forensic inspections, architectural inspections, floor mapping for interior designing, etc., where the rendered model may be used for measurements, color choices, and other such decisions, the imprecisions are not tolerable.

Such technical challenges affecting the quality of the data, and particularly the color of the 3D data, captured by one or more 3D measuring devices are addressed by the technical solutions described herein. Embodiments of the technical solutions described herein facilitate performing multi-band blending on a set of input 3D data (each of them captured at a different position) to minimize variations in attributes between the different data that are captured from respective different positions. With multi-band blending, attribute data from different frequency bands are blended separately. Embodiments described herein discuss multi-band blending of color data associated with 3D data captured by the 3D measuring devices, however, it should be noted that such multi-band blending can be performed on any other attribute that is associated with the 3D data, such as laser intensity, infrared intensity, temperature, texture and surface coordinates, etc.

As a result, technical solutions described herein avoid producing visual artifacts and discontinuities at transition boundaries. Further, technical solutions described herein minimize overall color and contrast variation, even in far-away areas of the captured scene.

Existing techniques, which address similar technical challenges, only optimize the discontinuities at transition boundaries or the overall color and contrast variation, but not both. Such optimizations are at the expense of each other in the existing techniques. The technical solutions described herein overcome the technical challenges by using multi-band blending. The technical solutions described herein optimize both, the effects of transition boundaries, and the overall color and contrast.

Embodiments of the technical solutions described herein facilitate "multi-band pyramids" as a representation of 3D data that stores color data for different frequency bands separately. Further, embodiments of the technical solutions herein provide operators that convert from voxel grid to multi-band pyramid and vice versa. A multi-band pyramid represents a Laplacian of the 3D data that is captured.

Further, embodiments of the technical solutions described herein facilitate executing a method for generating, for a number of voxel grids, each corresponding to a data capture at a specific position, a single voxel grid containing all of color data blended together. The method is useful when 3D captures can be represented as voxel grids.

Further, a second method described herein for point-cloud extension facilitates using, as input, a number of point clouds instead of voxel grids. For each input point cloud, the second method produces a corresponding output point cloud with blended colors. The method is useful when 3D captures can be represented as point clouds.

In some embodiments, the methods are executed using input data that are in the same 3D coordinate system, and also have some overlap with each other.

The technical solutions described herein can be used in case of data that is captured by any 3D measurement device, such as photogrammetry devices, laser scanners, etc., or any other 3D measurement device that captures color data using passive light sources. Here, "passive light sources" include ambient light sources that are not actively controlled by the 3D measuring device.

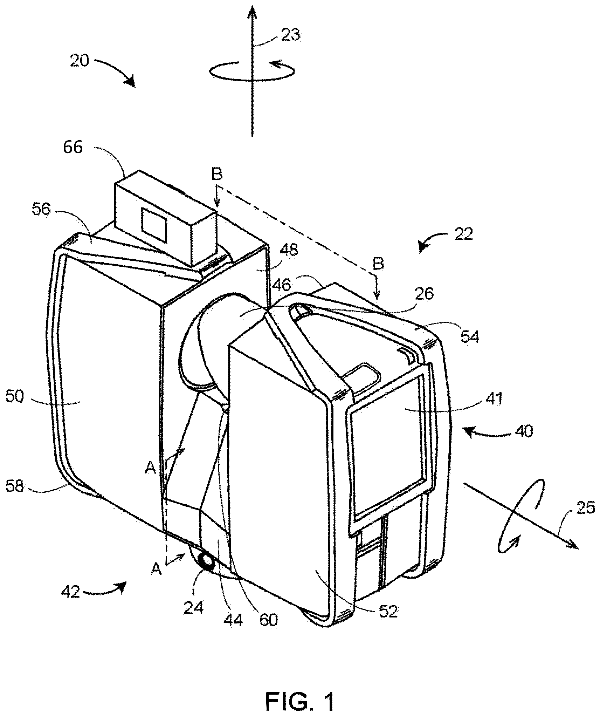

Referring now to FIGS. 1 - 3, a laser scanner 20 is shown for optically scanning and measuring the environment surrounding the laser scanner 20. The laser scanner 20 has a measuring head 22 and a base 24. The measuring head 22 is mounted on the base 24 such that the laser scanner 20 may be rotated about a vertical axis 23. In one embodiment, the measuring head 22 includes a gimbal point 27 that is a center of rotation about the vertical axis 23 and a horizontal axis 25. The measuring head 22 has a rotary mirror 26, which may be rotated about the horizontal axis 25. The rotation about the vertical axis may be about the center of the base 24. The terms vertical axis and horizontal axis refer to the scanner in its normal upright position. It is possible to operate a 3D coordinate measurement device on its side or upside down, and so to avoid confusion, the terms azimuth axis and zenith axis may be substituted for the terms vertical axis and horizontal axis, respectively. The term pan axis or standing axis may also be used as an alternative to vertical axis.

The measuring head 22 is further provided with an electromagnetic radiation emitter, such as light emitter 28, for example, that emits an emitted light beam 30. In one embodiment, the emitted light beam 30 is a coherent light beam such as a laser beam. The laser beam may have a wavelength range of approximately 300 to 1600 nanometers, for example 790 nanometers, 905 nanometers, 1550 nm, or less than 400 nanometers. It should be appreciated that other electromagnetic radiation beams having greater or smaller wavelengths may also be used. The emitted light beam 30 is amplitude or intensity modulated, for example, with a sinusoidal waveform or with a rectangular waveform. The emitted light beam 30 is emitted by the light emitter 28 onto a beam steering unit, such as mirror 26, where it is deflected to the environment. A reflected light beam 32 is reflected from the environment by an object 34. The reflected or scattered light is intercepted by the rotary mirror 26 and directed into a light receiver 36. The directions of the emitted light beam 30 and the reflected light beam 32 result from the angular positions of the rotary mirror 26 and the measuring head 22 about the axes 25 and 23, respectively. These angular positions in turn depend on the corresponding rotary drives or motors.

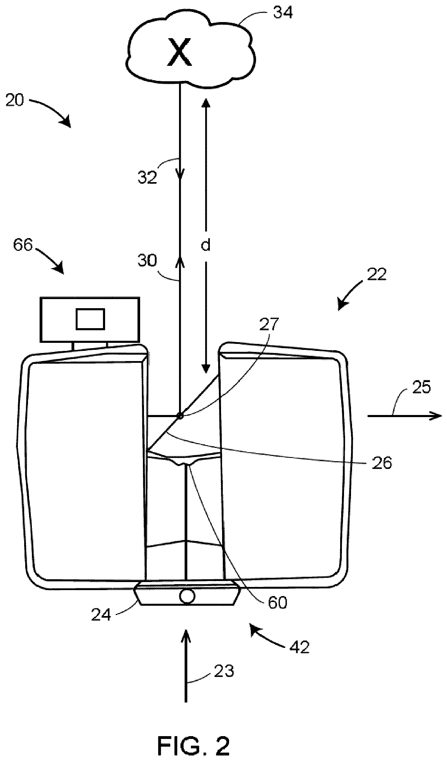

Coupled to the light emitter 28 and the light receiver 36 is a controller 38. The controller 38 determines, for a multitude of measuring points X (FIG. 2), a corresponding number of distances d between the laser scanner 20 and the points X on object 34. The distance to a particular point X is determined based at least in part on the speed of light in air through which electromagnetic radiation propagates from the device to the object point X. In one embodiment, the phase shift of modulation in light emitted by the laser scanner 20 and the point X is determined and evaluated to obtain a measured distance d.

The speed of light in air depends on the properties of the air, such as the air temperature, barometric pressure, relative humidity, and concentration of carbon dioxide. Such air properties influence the index of refraction $n$ of the air. The speed of light in air is equal to the speed of light in vacuum c divided by the index of refraction. In other words, $c_{air}$ = c / n. A laser scanner of the type discussed herein is based on the time-of-flight (TOF) of the light in the air (the round-trip time for the light to travel from the device to the object and back to the device). Examples of TOF scanners include scanners that measure round trip time using the time interval between emitted and returning pulses (pulsed TOF scanners), scanners that modulate light sinusoidally, and measure phase shift of the returning light (phase-based scanners), as well as many other types. A method of measuring distance based on the time-of-flight of light depends on the speed of light in air and is therefore easily distinguished from methods of measuring distance based on triangulation. Triangulation-based methods involve projecting light from a light source along a particular direction and then intercepting the light on a camera pixel in a particular direction. By knowing the distance between the camera and the projector and by matching a projected angle with a received angle, the method of triangulation enables the distance to the object to be determined based on one known length and two known angles of a triangle. The method of triangulation, therefore, does not directly depend on the speed of light in air.

In one mode of operation, the scanning of the volume around the laser scanner 20 takes place by rotating the rotary mirror 26 relatively quickly about axis 25 while rotating the measuring head 22 relatively slowly about axis 23, thereby moving the assembly in a spiral pattern. In an exemplary embodiment, the rotary mirror rotates at a maximum speed of 5820 revolutions per minute. For such a scan, the gimbal point 27 defines the origin of the local stationary reference system. The base 24 rests in this local stationary reference system.

In addition to measuring a distance d from the gimbal point 27 to an object point X, the scanner 20 may also collect gray-scale information related to the received intensity (equivalent to the term "brightness" or "optical power") value. The gray-scale value may be determined at least in part, for example, by the integration of the bandpass-filtered and amplified signal in the light receiver 36 over a measuring period attributed to the object point X. As will be discussed in more detail herein, the intensity value may be used to enhance color images that are used to colorize the scanned data.

The measuring head 22 may include a display device 40 integrated into the laser scanner 20. The display device 40 may include a graphical touch screen 41, as shown in FIG. 1, which allows the operator to set the parameters or initiate the operation of the laser scanner 20. For example, screen 41 may have a user interface that allows the operator to provide measurement instructions to the device, and the screen may also display measurement results.

The laser scanner 20 includes a carrying structure 42 that provides a frame for the measuring head 22 and a platform for attaching the components of the laser scanner 20. In one embodiment, the carrying structure 42 is made from a metal such as aluminum. The carrying structure 42 includes a traverse member 44 having a pair of walls 46, 48 on opposing ends. The walls 46, 48 are parallel to each other and extend in a direction opposite the base 24. Shells 50, 52 are coupled to walls 46, 48 and cover the components of the laser scanner 20. In the exemplary embodiment, shells 50, 52 are made from a plastic material, such as polycarbonate or polyethylene, for example. The shells 50, 52 cooperate with the walls 46, 48 to form a housing for the laser scanner 20.

On an end of the shells 50, 52 opposite the walls 46, 48, a pair of yokes 54, 56 are arranged to partially cover the respective shells 50, 52. In the exemplary embodiment, the yokes 54, 56 are made from a suitably durable material, such as aluminum, for example, that assists in protecting the shells 50, 52 during transport and operation. The yokes 54, 56 each includes a first arm portion 58 that is coupled, such as with a fastener, for example, to the traverse 44 adjacent the base 24. The arm portion 58 for each yoke 54, 56 extends from the traverse 44 obliquely to an outer corner of the respective shell 50, 52. From the outer corner of the shell, the yokes 54, 56 extend along the side edge of the shell to an opposite outer corner of the shell. Each yoke 54, 56 further includes a second arm portion that extends obliquely to the walls 46, 48. It should be appreciated that the yokes 54, 56 may be coupled to the traverse 42, the walls 46, 48, and the shells 50, 54 at multiple locations.

The pair of yokes 54, 56 cooperate to circumscribe a convex space within which the two shells 50, 52 are arranged. In the exemplary embodiment, the yokes 54, 56 cooperate to cover all of the outer edges of the shells 50, 54, while the top and bottom arm portions project over at least a portion of the top and bottom edges of the shells 50, 52. This provides advantages in protecting the shells 50, 52, and the measuring head 22 from damage during transportation and operation. In other embodiments, the yokes 54, 56 may include additional features, such as handles to facilitate the carrying of the laser scanner 20 or attachment points for accessories, for example.

On top of the traverse 44, a prism 60 is provided. The prism extends parallel to walls 46, 48. In the exemplary embodiment, the prism 60 is integrally formed as part of the carrying structure 42. In other embodiments, prism 60 is a separate component that is coupled to the traverse 44. When mirror 26 rotates, during each rotation, mirror 26 directs the emitted light beam 30 onto the traverse 44 and the prism 60. Due to non-linearities in the electronic components, for example, in the light receiver 36, the measured distances d may depend on signal strength, which may be measured in optical power entering the scanner or optical power entering optical detectors within the light receiver 36, for example. In an embodiment, a distance correction is stored in the scanner as a function (possibly a nonlinear function) of distance to a measured point, and optical power (generally unscaled quantity of light power sometimes referred to as "brightness") returned from the measured point and sent to an optical detector in the light receiver 36. Since the prism 60 is at a known distance from the gimbal point 27, the measured optical power level of light reflected by the prism 60 may be used to correct distance measurements for other measured points, thereby allowing for compensation to correct for the effects of environmental variables such as temperature. In the exemplary embodiment, the resulting correction of distance is performed by controller 38.

In an embodiment, the base 24 is coupled to a swivel assembly (not shown) such as that described in commonly owned U.S. Patent No. 8,705,012 ('012), which is incorporated by reference herein. The swivel assembly is housed within the carrying structure 42 and includes a motor 138 that is configured to rotate the measuring head 22 about the axis 23. In an embodiment, the angular/rotational position of the measuring head 22 about the axis 23 is measured by angular encoder 134.

An auxiliary image acquisition device 66 may be a device that captures and measures a parameter associated with the scanned area or the scanned object and provides a signal representing the measured quantities over an image acquisition area. The auxiliary image acquisition device 66 may be, but is not limited to, a pyrometer, a thermal imager, an ionizing radiation detector, or a millimeter-wave detector. In an embodiment, the auxiliary image acquisition device 66 is a color camera.

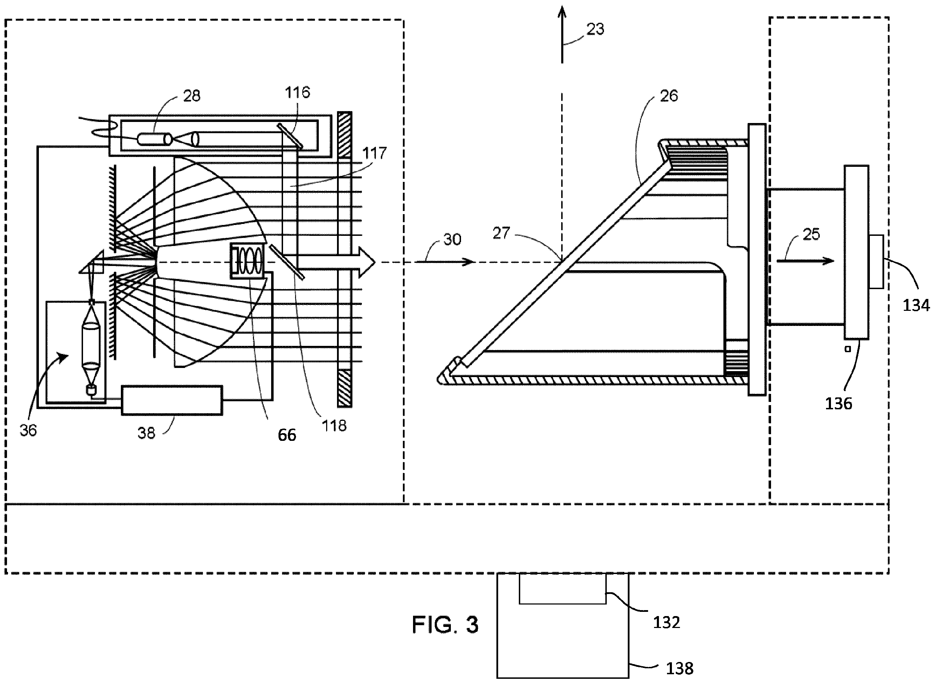

In an embodiment, camera 66 is located internally to the scanner (see FIG. 3) and may have the same optical axis as the 3D scanner device. In this embodiment, camera 66 is integrated into the measuring head 22 and arranged to acquire images along the same optical pathway as emitted light beam 30 and reflected light beam 32. In this embodiment, the light from the light emitter 28 reflects off a fixed mirror 116 and travels to dichroic beam-splitter 118 that reflects the light 117 from the light emitter 28 onto the rotary mirror 26. In an embodiment, mirror 26 is rotated by a motor 136, and the angular/rotational position of the mirror is measured by an angular encoder 134. The dichroic beam-splitter 118 allows light to pass through at wavelengths different than the wavelength of light 117. For example, the light emitter 28 may be a near-infrared laser light (for example, that emits light at wavelengths of 780 nm or 1150 nm), with the dichroic beam-splitter 118 configured to reflect the infrared laser light while allowing visible light (e.g., wavelengths of 400 to 700 nm) to transmit through. In other embodiments, the determination of whether the light passes through the beam-splitter 118 or is reflected depends on the polarization of the light. Camera 66 obtains 2D images of the scanned area to capture color data to add to the captured point cloud. In the case of a built-in color camera having an optical axis coincident with that of the 3D scanning device, the direction of the camera view may be easily obtained by simply adjusting the steering mechanisms of the scanner - for example, by adjusting the azimuth angle about the axis 23 and by steering the mirror 26 about the axis 25.

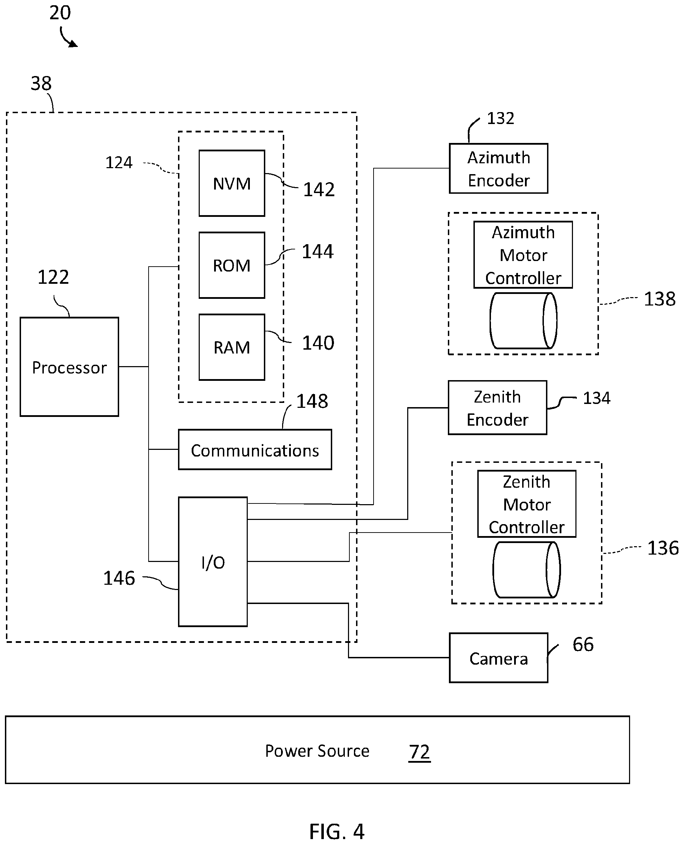

Referring to FIG. 4 with continuing reference to FIGS. 1-3, elements are shown of the laser scanner 20. Controller 38 is a suitable electronic device capable of accepting data and instructions, executing the instructions to process the data, and presenting the results. The controller 38 includes one or more processing elements 122. The processors may be microprocessors, field programmable gate arrays (FPGAs), digital signal processors (DSPs), and generally any device capable of performing computing functions. The one or more processors 122 have access to memory 124 for storing information.

Controller 38 is capable of converting the analog voltage or current level provided by light receiver 36 into a digital signal to determine a distance from the laser scanner 20 to an object in the environment. Controller 38 uses the digital signals that act as input to various processes for controlling the laser scanner 20. The digital signals represent one or more laser scanner 20 data including but not limited to the distance to an object, images of the environment, images acquired by the camera 66, angular/rotational measurements by a first or azimuth encoder 132, and angular/rotational measurements by a second axis or zenith encoder 134.

In general, controller 38 accepts data from encoders 132, 134, the light receiver 36, light source 28, and the camera 66 and is given certain instructions for the purpose of generating a 3D point cloud of a scanned environment. Controller 38 provides operating signals to the light source 28, the light receiver 36, the camera 66, the zenith motor 136, and the azimuth motor 138. The controller 38 compares the operational parameters to predetermined variances and, if the predetermined variance is exceeded, generates a signal that alerts an operator to a condition. The data received by controller 38 may be displayed on a user interface 40 coupled to controller 38. The user interface 40 may be one or more LEDs (light-emitting diodes) 82, an LCD (liquid-crystal diode) display, a CRT (cathode ray tube) display, a touchscreen display, or the like. A keypad may also be coupled to the user interface for providing data input to controller 38. In one embodiment, the user interface is arranged or executed on a mobile computing device that is coupled for communication, such as via a wired or wireless communications medium (e.g., Ethernet, serial, USB, Bluetooth™ or WiFi), for example, to the laser scanner 20.

The controller 38 may also be coupled to external computer networks such as a local area network (LAN) and the Internet. A LAN interconnects one or more remote computers, which are configured to communicate with controller 38 using a well-known computer communications protocol such as TCP/IP (Transmission Control Protocol/Internet Protocol), RS-232, ModBus, and the like. Additional systems 20 may also be connected to LAN with the controllers 38 in each of these systems 20 being configured to send and receive data to and from remote computers and other systems 20. The LAN may be connected to the Internet. This connection allows controller 38 to communicate with one or more remote computers connected to the Internet.

The processors 122 are coupled to memory 124. The memory 124 may include random access memory (RAM) device 140, a non-volatile memory (NVM) device 142, and a read-only memory (ROM) device 144. In addition, the processors 122 may be connected to one or more input/output (I/O) controllers 146 and a communications circuit 148. In an embodiment, the communications circuit 92 provides an interface that allows wireless or wired communication with one or more external devices or networks, such as the LAN discussed above.

Controller 38 includes operation control methods described herein, which can be embodied in application code. For example, these methods are embodied in computer instructions written to be executed by processors 122, typically in the form of software. The software can be encoded in any language, including, but not limited to, assembly language, VHDL (Verilog Hardware Description Language), VHSIC HDL (Very High Speed IC Hardware Description Language), Fortran (formula translation), C, C++, C#, Objective-C, Visual C++, Java, ALGOL (algorithmic language), BASIC (beginners all-purpose symbolic instruction code), visual BASIC, ActiveX, HTML (Hypertext Markup Language), Python, Ruby, and any combination or derivative of at least one of the foregoing.

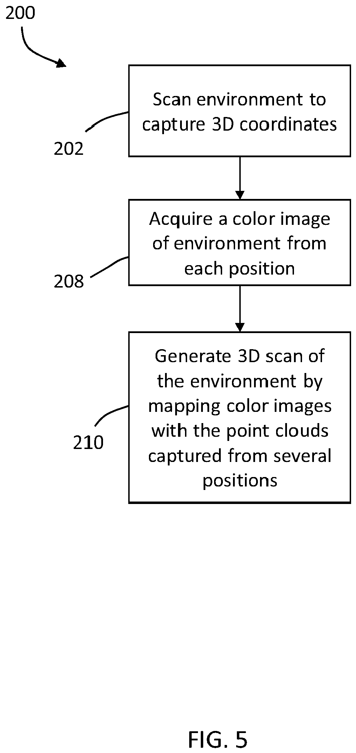

Referring now to FIG. 5, an embodiment of a method 200 is shown for generating a scan of the environment with the scanner 20. The method 200 begins in block 202 where the environment in which the scanner 20 is positioned is scanned. As described herein, the volume (e.g., the scan area) around the laser scanner 20 is performed by rotating the rotary mirror 26 relatively quickly about axis 25 while rotating the measuring head 22 relatively slowly about axis 23, thereby moving the assembly in a spiral pattern. Thus, for each light beam emitted, a distance value and the angles of the mirror 26 and the measurement head 22 is determined. Thus, a 3D coordinate of a point in the environment may be determined for each emitted and received light beam. Further, for each light beam, an intensity value of the returned light beam is measured. The scanned 3D data is stored as voxel grids in some embodiments. In other embodiments, the 3D data is stored as point clouds.

The light beams are emitted and received as the measurement head 22 is rotated 180 degrees about the axis 23. The method 200 further includes, at block 208, acquiring color images of the environment. In an embodiment, at least one 2D color image is acquired by the camera 66 for each 3D data captured. The 2D image acquired using the camera 66 captures color data in the volume surrounding the laser scanner 20. In an exemplary embodiment, the acquired 2D color image is in an RGB color model. In other embodiments, other color models, e.g., cyan, magenta, and yellow (CMY), or cyan, magenta, yellow, and black (CMYK), or any other color model can be used.

In one or more embodiments, the scanner 20 captures a 3D data (point cloud/voxel grid) and a 2D color image from a position to represent a portion of the environment that is in the field of view of the scanner 20 from that position. Several such data captures are performed from multiple positions in the environment. For example, if a 3D scan of an object, such as a shoe, a furniture item, or any other such object is to be captured, representations of the object from several different perspectives are captured. It is understood that the object can be any other type of object and not limited to the examples described herein. Also, it should be noted that a target that is being scanned can include other aspects of an environment, such as a geographical feature, like a lake, a road, etc. Alternatively, or in addition, the target can be a scene, such as the exterior of a building, the interior of a building (e.g., industrial floorplan), a crime scene, or any other such scene that is to be rendered and viewed by one or more experts to make respective observations/conclusions.

Once the 2D color image is acquired, the method 200 includes, at block 210, generating a colorized 3D scan by mapping the 2D images with the 3D coordinates captured by the scanner 20.

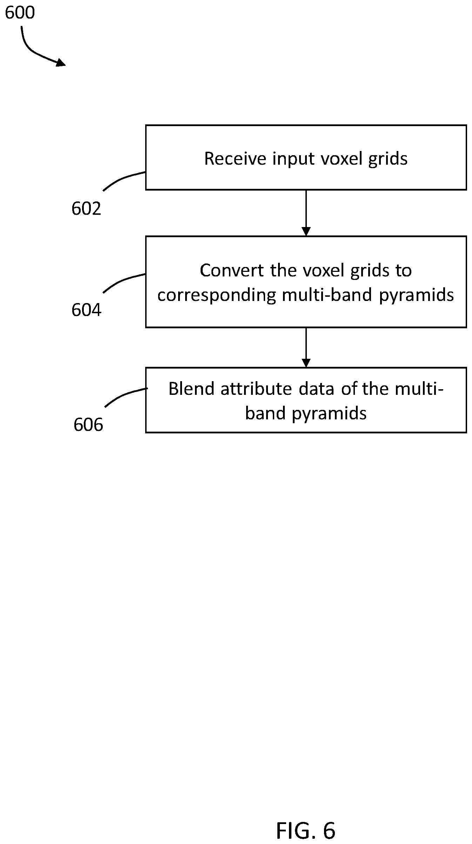

FIG. 6 depicts a flowchart of a method for mapping the 2D images with the 3D coordinates with multi-band blending according to one or more embodiments. The method 600 includes generating a "multi-band pyramid," which is a bandpass representation of the captured 3D data. A multi-band pyramid is made of multiple detail levels, each level storing attribute data, such as color, at a different resolution. In other words, each level of pyramid stores part of attribute data that is at a specific spatial frequency band. In the context of this application "frequency" refers to spatial frequency unless otherwise specified, and spatial frequency is the amount of change to attribute data between points in 3D space (and not the light wave frequency of RGB color rays).

Further, as is described herein, the method 600 uses two operators for converting a voxel grid to a multi-band pyramid and another for the reverse conversion from a multi-band pyramid to a voxel grid. The conversion from voxel grid to multi-band pyramid and back is lossless and can accurately recreate the original voxel grid.

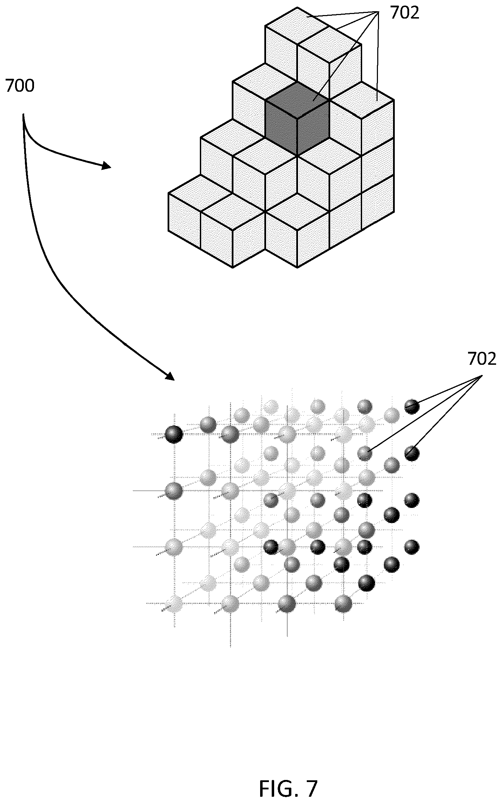

Referring to the flowchart in FIG. 6, the method 600, at block 602, includes receiving a voxel grid 700 (FIG. 7) from the 3D measuring device 20.

FIG. 7 depicts an example of voxel grid 700. The voxel grid 700 includes a series of voxels 702 in a stack, with a single voxel 702 shaded. A voxel grid 700 is a grid in three-dimensional space that tessellates the Euclidean 3D space into voxels 702. As with pixels in a 2D bitmap, each voxel 702 represents a unit cube and can be addressed by a 3D index $(i, j, k)$. The position (3D coordinates) of a voxel 702 in 3D space can be computed from its index and the coordinates of the bounding cube around the area that is represented by the voxel grid 700. Each voxel 702 with index $(i, j, k)$ is assigned a color value in one or more embodiments herein. An appropriate data structure is used to store these color values for the voxel grid 700. In one or more embodiments, the data structures are stored in contiguous memory, while in other embodiments, the data structures are stored sparsely in computer-readable memory.

The color values assigned to each voxel 702 can be expressed in any color system that satisfies at least the following requirements. The color values have to be vectors or scalar floating-point values that can be stored in the computer-readable memory. Arithmetic operators such as addition, subtraction, and division by a scalar factor can be performed using the color values. Further, the color values use a linear range of values. For example, for RGB color, a vector of 3 floating-point values represents red, green, and blue color channels, with a pre-defined linear range (for example, between 0 to 255, or between 0 to 1).

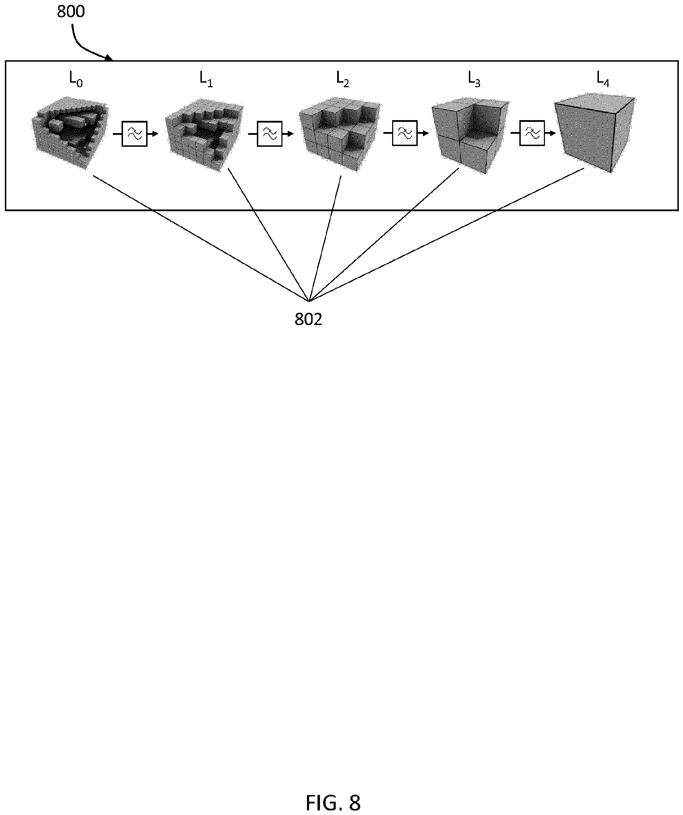

The method 600 includes, at block 604, creating a multi-band pyramid for the input voxel grid 700. FIG. 8 depicts a multi-band pyramid 800 according to one or more embodiments. A multi-band pyramid is a collection of multiple levels 802, where each level 802 is stored as a voxel grid. Accordingly, in the context of a multi-band pyramid, "voxel grid" and "level" can be used interchangeably. Therefore, we can define a multi-band pyramid 800 as a collection of the voxel grids $L_0, L_1, ... L_n$ 804 where, 1) All levels $L_0, L_1, ... L_n$ tessellate the same area in 3D space (that is, they all have the same bounding cube); and 2) Each level $L_i$ has a predetermined fraction of the resolution of the previous level ($L_{i-1}$). For example, in the depicted example, the predetermined fraction is half, i.e., if level $L_0$ has a resolution of (256x256256), then $L_1$ has the resolution (128×128×128), $L_2$ *will* be (64x64x64), and so forth. Multi-band pyramids are bandpass, that is, each level only stores the part of data that is unique to that resolution and level of detail.

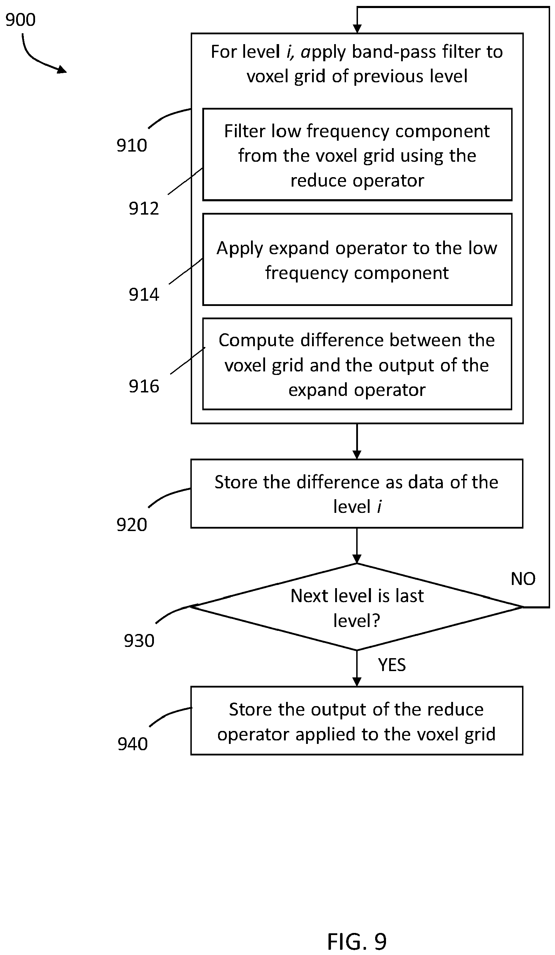

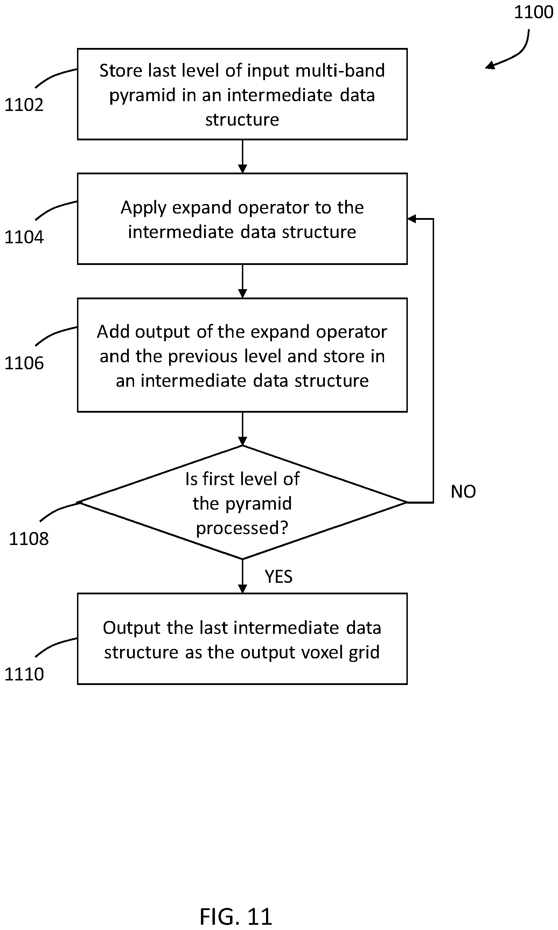

An algorithm that forms the multi-band pyramid 800 by subjecting an input voxel grid 700 to repeated smoothing and subsampling is described further herein (FIG. 9). Each iteration of this process results in a smaller voxel grid 802 with increased smoothing, but with decreased spatial sampling density (that is, decreased resolution). In other words, each iteration can be thought of as computing a 3D difference of Gaussians (DoG) (see FIG. 8). This way, the conversion of the voxel grid 700 to the multi-band pyramid 800 can be thought of as a bandpass filter that stores each frequency band as a separate level 802 of the pyramid 800 (see FIG. 8). Also, an algorithm to reverse the operation by successively upsampling and smoothing pyramid levels 802 and merging the levels 802 together to reproduce the original voxel grid 700 is also described further herein (FIG. 11).

In both cases, the operators for the conversion (and reverse conversion), i.e., "smoothing and subsampling" (reduce operator) and "smoothing and upsampling" (expand operator), are variations of the same smooth operator, which is described further. The difference is that for the two different conversions, the resolution of input and output voxel grids are switched.

Table 1 provides an algorithm for the smooth operator.

| Table 1 - Smooth Operator |
|---|
| Let $I$ be the input voxel grid and O the output voxel grid.<br>For each voxel vo in O, assign a color value using as follows:<br><br>$$sum_w = 0$$<br><br>$$sum_{attr} = (0,0,0)$$<br><br>For each voxel vi in $I$:<br><br>$$w = weight\ (vi)$$<br><br>$$sum_w\ += w$$<br><br>$$sum_{attr}\ += w * attribute\ (vi)$$<br><br>Finally, output voxel is constructed by the weighted averaging<br><br>$$color\ (vo) = sum_{attr}\ /\ sum_w$$<br><br>Here, the weight function is a function of the Euclidean distance between center of voxels vi and vo. For example, in an embodiment, the following Gaussian function can be used:<br><br>$$weight(vi) = exp\left(-\frac{distance(vi, vo)^2}{2\sigma^2}\right) \qquad (1)$$<br><br>The $\sigma$ parameter of the Gaussian function controls the bandwidth of this low-pass filter. It controls the amount of detail that is preserved in each level of pyramid. Choosing the right value for this parameter is application specific. In an embodiment, $\sigma = 1$. |

The reduce operator is an instance of the smooth operator where the input voxel grid has a higher resolution than the output voxel grid. For example, the voxel grid in $L_0$ can have twice the resolution of the voxel grid in $L_1$. Table 2 provides an algorithm for the reduce operator that uses the smooth operator. The reduce operator can be considered to be a low pass filter that filters data from the input voxel grid when creating the output voxel grid.

| Table 2 Reduce Operator |
|---|
| Let $I$ be the input voxel grid with a resolution of ($m, n, p$)<br>Create an empty voxel grid O with a resolution of ($m/2, n/2, p/2$)<br><br>$$O = smooth\ (I)$$ |

Conversely to the reduce operator, the expand operator is an instance of the smooth operator where the input voxel grid has a lower resolution than that of the output voxel grid. For example, the voxel grid in $L_1$ can have half the resolution of the voxel grid in $L_0$. An algorithm to implement the expand operator is provided in table 3. When applied to the output of the reduce operator, expand tries to recreate the original resolution voxel grid from the output of the low pass filter. Because the output of the reduce operator no longer contains high-frequency details, the expand operator can only recreate the input of reduce partially. By finding the difference between an original voxel grid and the expanded result of its low-pass filter, color data for the specific frequency band that was removed by the low-pass filter can be determined. Therefore, attributed data, such as the color, for a given voxel grid $V$ can be separated into low- and high-frequency bands by:

$$low\ frequency = \boldsymbol{reduce}(V)$$
$$high\ frequency = V - \boldsymbol{expand}(low\ frequency) \tag{2}$$

Further, with a Gaussian weight function like the one given in Equation 1, when distance is above a certain threshold, the value of weight becomes mathematically negligible. Therefore, the implementation of the expand and reduce operators can be optimized by reducing the search area for calculating the color of each output voxel to only the neighborhood of voxels in the input voxel grid that have non-negligible weights. Accordingly, the expand and reduce operators can be effectively approximated by 3D convolutions of a Gaussian kernel and the input voxel grid.

FIG. 9 depicts a flowchart of a method for converting a voxel grid to a multi-band pyramid according to one or more embodiments. The depicted method 900 depicts converting an input voxel grid ($VI$) 700 into an output multi-band pyramid 800. However, it is understood that in one or more embodiments, multiple input voxel grids can be converted into corresponding multi-band pyramids in conjunction. The multi-band pyramid 800 that is output includes multiple levels 802, and each level is a voxel grid ($L_0$, $L_1$, ... $L_n$). All voxel grids $L_0$, $L_1$, ... $L_n$ tesselate the same area in 3D space as $VI$ 700 (that is, the voxel grids 802 all have the same bounding cube as $VI$).

To create the multi-band pyramid 800, at block 910, for creating a level $L_i$ of the multi-band pyramid 800, the bandpass filter, from equation (2), is applied to the low-frequency output of the previous iteration, i.e., $L_{i-1}$. Applying the bandpass filter includes applying the reduce operator to the voxel grid 802 from the previous level (912) and applying the expand operator to the output of the reduce operator (914). Further, a difference is computed (916) between the voxel grid 802 from the previous level and the output of the expand operator (from 914). The computed difference from the operations (910) is stored as the data for current level $L_i$, at block 920. These operations are repeated until the last level $n$ is reached, $n$ being a predetermined configurable value, as shown at block 930. For the last level ($L_n$) of the pyramid 800, there is no next level, so instead of the difference with the next level, the whole reduced voxel grid 802 is stored, at block 940.

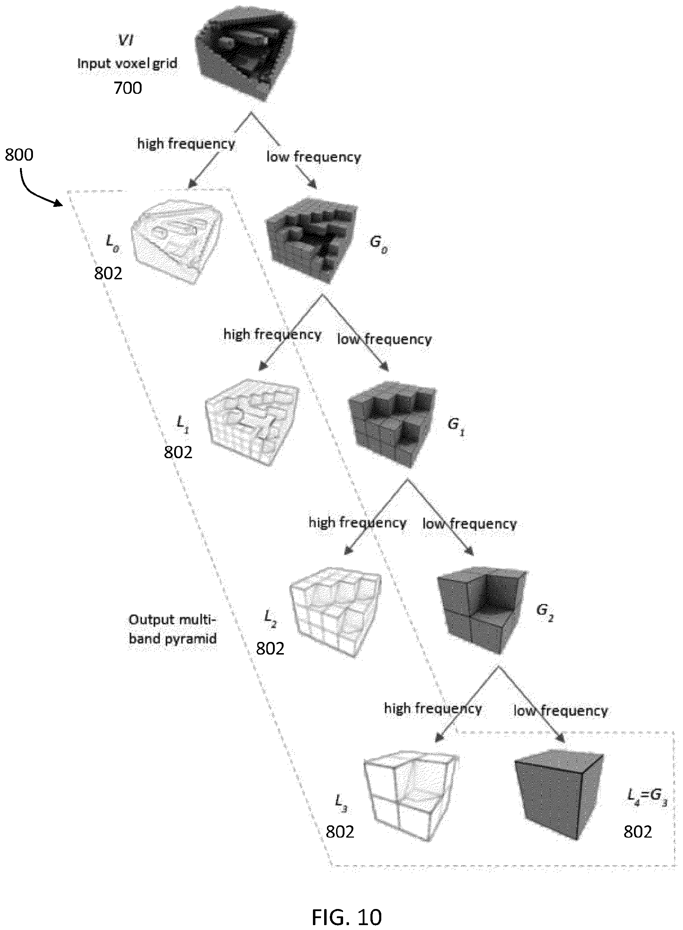

Table 3 depicts a sequence of the iterations shown in FIG. 9. FIG. 10 shows a visual representation of converting a voxel grid to a multi-band pyramid according to one or more embodiments, with n=4. The input voxel grid 700 is converted to the multi-band pyramid 800 with n=4 levels 802 ($L_0$, $L_1$, $L_2$, $L_3$, $L_4$). As can be seen in FIGS. 9 and 10, intermediate data voxel grids $G_0$, $G_1$, ..., $G_n$ are created for computing the output of the reduce operator at each iteration. These intermediate voxel grids can be discarded after each iteration, and only the ($L_0$, $L_1$, $L_2$, $L_3$, $L_4$) are stored. Executing the method 900, accordingly, converts the input voxel grid 700 into multi-band pyramid 800 by separating frequency bands of the attribute, such as the color, at each level of the multi-band pyramid 800. It is understood that the example shown in FIG. 10 has four levels in the multi-band pyramid 800. However, in other embodiments, the number of levels can vary.

| Table 4 - Converting voxel grid into multi-band pyramid |
| :---: |
| $G_0 = \text{reduce}(VI)$ |
| $L_0 = VI - \text{expand}(G_0)$ |
| $G_1 = \text{reduce}(G_0)$ |
| $L_1 = G_0 - \text{expand}(G_1)$ |
| $G_2 = \text{reduce}(G_1)$ |
| $L_2 = G_1 - \text{expand}(G_2)$ |
| ... |
| $G_{n-1} = \text{reduce}(G_{n-2})$ |
| $L_{n-1} = G_{n-2} - \text{expand}(G_{n-1})$ |
| $L_n = G_{n-1}$ |

FIG. 11 depicts a flowchart of a method for converting a multi-band pyramid into a voxel grid according to one or more embodiments. The multi-band pyramid 800 thus created can be re-converted into the voxel grid 700. The reconversion is lossless. The method 1100 that is depicted uses the multi-band pyramid 800 as an input. The multi-band pyramid contains multiple levels, and each level is a voxel grid ($L_0$, $L_1$, ... $L_n$). The output of the method 1100 is a single voxel grid ($VO$), which tessellates the same area in 3D space as $L_0$ (that is, it has the same bounding cube as $L_0$). $VO$ has the same resolution as $L_0$.

To recreate the original voxel grid 700, the method 1100 includes combining all levels of the input multi-band pyramid 800 together. The sequence of operations to be performed is the reverse of the sequence in Table 4. To this end, the method 1100 includes starting from the last level of the multi-band pyramid 800. The last level ($L_n$) 802 is stored in an intermediate data structure ($G_n$), at block 1102. In each iteration, the expand operator is applied to upsample the most recent intermediate data structure, at 1104. The result of the expand operator is added to the previous level of the multi-band pyramid 800, at block 1106. These operations are repeated until the first level is reached, as shown at block 1108. Once the first level has been processed, the most recent combination represents the output voxel grid ($VO$), at block 1110. Table 5 shows a sequence of such operations.

The treatment of the last level ($L_n$) that is operated on is different from other levels because it does not contain a difference with its previous level. For the last level, an intermediate data structure $G_n$ is populated with the data in the last level $L_n$ (i.e., $G_n = L_n$), and for subsequent levels:

$$G_i = L_{i+1} + expand(G_{i+1}) \qquad with\ (i \neq n).$$

| Table 5 - Converting multi-band pyramid to voxel grid |
|---|
| $$G_n = L_n$$ $$G_{n-1} = L_n + \text{expand}(G_n)$$ $$\dots$$ $$G_1 = L_2 + \text{expand}(G_2)$$ $$G_0 = L_1 + \text{expand}(G_1)$$ $$VO = L_0 + \text{expand}(G_0)$$ |

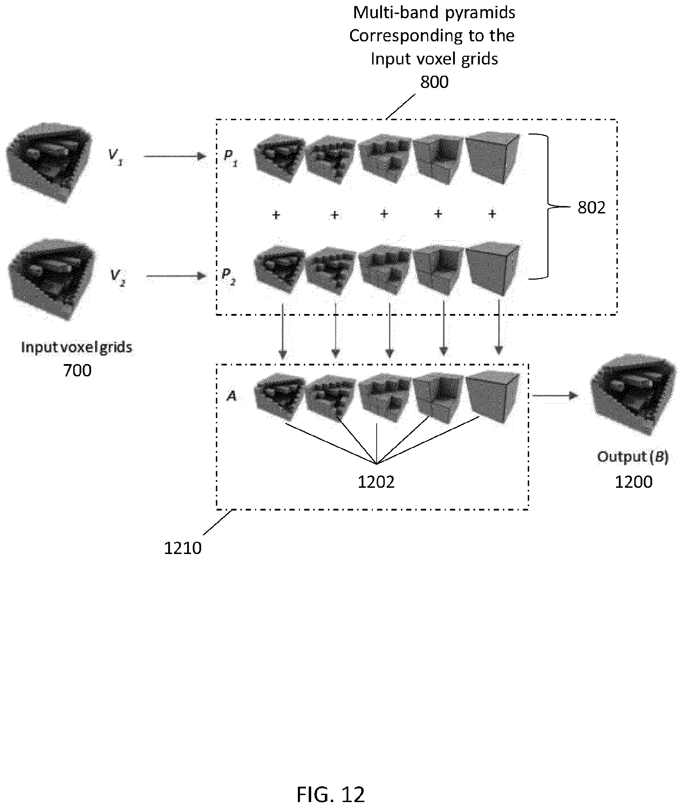

Referring back to FIG. 6, the method 600 further includes blending the attribute data of the voxel grids, at block 606. The attribute data can be color values. Embodiments described herein use multiple voxel grids 700 ($V_1$, $V_2$, ..., $V_n$) as input, each corresponding to a data capture from a specific position by the 3D measuring device 20. The blending produces a single blended voxel grid (B) 1200 (FIG. 12) containing attribute data, e.g., color, from all of the input voxel grids 700 blended together. B 1200 tessellates the same area in 3D space as the input voxel grids 700 ($V_1$, $V_2$, ..., $V_n$) (that is, it has the same bounding cube as inputs).

All input voxel grids 700 ($V_1$, $V_2$, ..., $V_n$) are in the same 3D coordinate system and have the same resolution. Further, B 700 has the same resolution as input voxel grids 700 ($V_1$, $V_2$, ..., $V_n$).

The blending of the multiple voxel grids 700, using the corresponding multi-band pyramids 800 includes blending corresponding levels 802 of the multi-band pyramids 800 together to create a blended multi-band pyramid. For blending each level 802, averaging, weighted averaging, or any other aggregation operation can be performed. The resulting blended multi-band pyramid is converted into a voxel grid using the algorithm described herein (FIG. 11).

FIG. 12 depicts a visual representation of the operations for blending attributes of multiple input voxel grids (V1, V2) into a single color-blended output voxel grid (B) according to one or more embodiments.

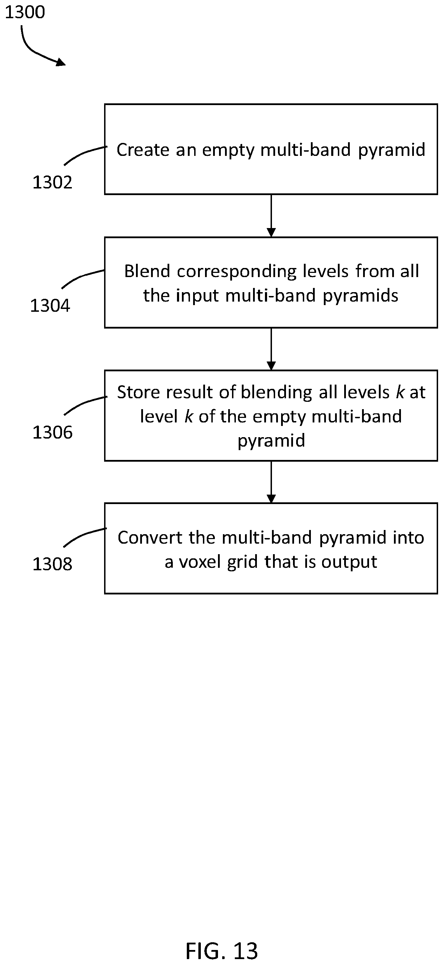

FIG. 13 depicts a flowchart for combining input voxel grids into a single blended output voxel grid according to one or more embodiments. The method 1300 includes creating an empty multi-band pyramid A 1210 (FIG. 12), at block 1302. The empty multi-band pyramid 1210 is configured so that the first level ($L_0$) is of the same resolution and coordinate system as the input voxel grids 700 ($V_1$, $V_2$, ..., $V_n$). The corresponding levels 802 of the multi-band pyramids 800 corresponding to the input voxel grids ($V_1$, $V_2$, ..., $V_n$) 700 are blended together using a mathematical operator, such as averaging, at block 1304. The result of the blending of each set of corresponding levels 802 is stored in the corresponding level 1202 in the empty multi-band pyramid 1210, at block 1306.

During this operation, in one or more embodiments, only one input voxel grid 700 is loaded in the memory at a time, and the input voxel grid 700 can be unloaded as soon as its data are added to the running operation (e.g., average). This can be used to reduce memory consumption for very large datasets that include a number of voxel grids above a predetermined threshold.

The multi-band pyramid that is thus populated is subsequently converted into the voxel grid B 1200, at block 1308. The conversion is performed as described herein (FIG. 11). Operations of the method are depicted in algorithm form in Table 6.

| Table 6 - Blending colors of multiple voxel grids |
|---|
| 1. Create empty pyramid *A* to store the running average. Level 0 in *A* has the same resolution and coordinate system as input voxel grids ($V_1$, $V_2$, ..., $V_n$) |
| 2. For each input *Vi* |

(continued)

| Table 6 - Blending colors of multiple voxel grids |
| --- |
| Convert $V_i$ into a multi-band pyramid $P_i$<br>Add each level of Pi to the same level in the running average ($A$):<br><br>$$level0(A) \mathrel{+}= \frac{1}{n} level0(P_i)$$<br><br>$$level1(A) \mathrel{+}= \frac{1}{n} level1(P_i)$$     (3)<br><br>$\cdots$ |
| 3. Merge levels of $A$ into a single voxel grid ($B$) |

In one or more embodiments, some voxels in a voxel grid 700 can be empty. For example, such empty voxels may belong to an empty space inside/outside of the measured object surfaces. Alternatively, the empty voxels can belong to the areas not visible from a certain position of the 3D measuring device 20. To correctly handle empty voxels, the blending operation, e.g., averaging, is performed per voxel, and only blend non-empty voxels from each voxel grid 700 to the running average, ignoring empty voxels.

In one or more embodiments, the 3D measuring device 20 captures the scanned data in the form of a point cloud or in a data structure that is easily convertible to a point cloud. The technical solutions described herein can be used for such embodiments as well, by taking a number of point clouds as input and for each input point cloud producing a corresponding output point cloud with blended attribute data, such as color.

A "point cloud" is a set of data points in 3D space surrounding the 3D measuring device 20. Each point has a position in cartesian coordinates (X, Y, Z) and an attribute value, e.g., color value. If point coordinates are stored in a different format (for example, angles and distances), they are converted to cartesian form using one or more known techniques.

It is understood that although the embodiments are described herein using color as an example of the attribute data that is blended, in other embodiments, attributes other than color can be blended using the technical solutions described herein.

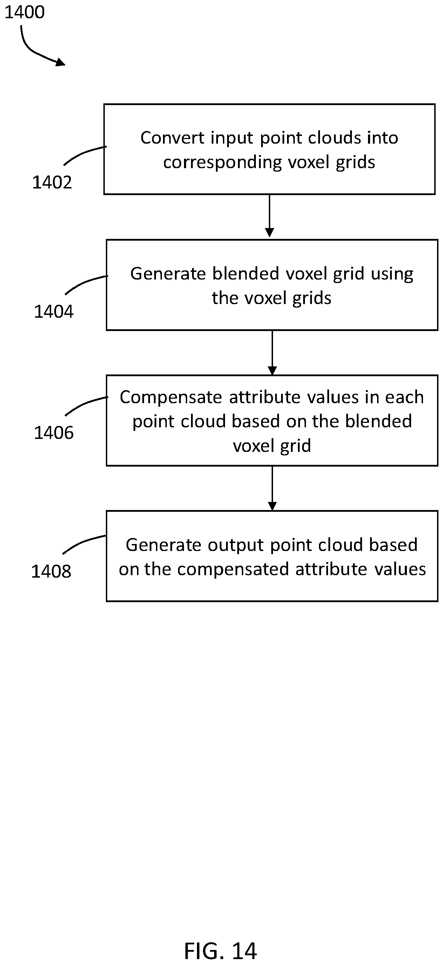

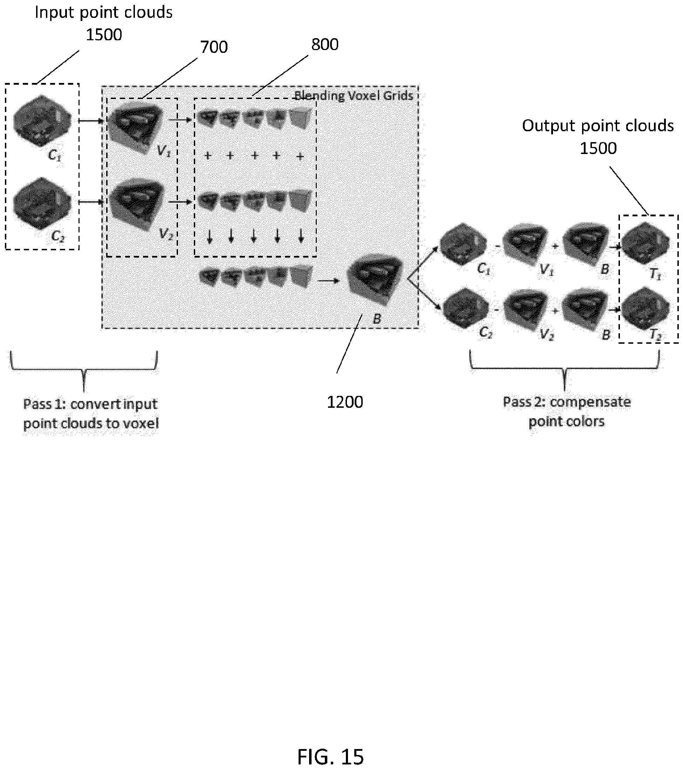

FIG. 14 depicts a flowchart of a method for mapping the 2D images with the 3D coordinates with multi-band blending according to one or more embodiments. FIG. 15 depicts a visual representation of the operations performed in the method 1400.

The method 1400 uses multiple point clouds 1500 ($C_1$, $C_2$, ..., $C_n$) as input and generates respectively corresponding multiple point clouds 1510 ($T_1$, $T_2$, ..., $T_n$) as output. Unlike the above description in the case of the input voxel grids 700, where the blending resulted in a single output voxel grids 1200, in the case of the point clouds, the number of outputs 1510 is equal to the number of input point clouds 1500. This provides the flexibility to perform additional application specific post-processing along with attribute blending (for example, depth fusion or noise reduction to create a final point cloud with reduced redundancy and improved spatial distribution of points).

At block 1402, the input point clouds 1500 are converted into corresponding voxel grids 700 ($V_1$, $V_2$, ..., $V_n$). An attribute blending algorithm requires overlaps in input data in order to be able to detect variations of the attribute being blended. Detecting overlaps is a technical challenge with point clouds as they can have points in arbitrary positions with random distances and densities. This technical challenge is resolved by the technical solutions described herein by transforming the point clouds into voxel grids to use voxel grids' inherent properties for overlap detection. Furthermore, the blending methods that have been described herein using voxel grids can be used. However, a technical challenge with this approach is that due to the limited resolution of voxel grids, this can result in the appearance of aliasing artifacts. To address this technical challenge, transformation operators for converting point clouds to corresponding voxel grids and back are defined herein to provide smoothing and scaling that reduce such aliasing effects.

To avoid aliasing artefacts, the input point clouds 1500 are converted to the corresponding voxel grids 700 by applying a low-pass filter that is called "smooth2" herein. It is understood that the low-pass filter can be named differently in other embodiments. The smooth2 filter behaves like the smooth low-pass filter (Table 1) described herein, which was used for creating levels of the multi-band pyramid 800. The smooth2 takes a point cloud as an input instead of a voxel grid (in the case of the smooth operator), and therefore the smooth2 operator has an infinite sub-voxel accuracy. The operations for the smooth2 operator are depicted in Table 7.

The smooth2 operator converts an input point cloud C into a corresponding voxel grid V.

| Table 7 - Smooth2 Operator for converting a point cloud to a voxel grid |
| --- |
| Let C be the input point cloud and *V* the output voxel grid. For each voxel v in V, assign a color value using the following algorithm: $$sum_w = 0$$ $$sum_{attr} = (0,0,0)$$ For each point c in C: $$w = weight\,(c)$$ $$sum_w \mathrel{+}= w$$ $$sum_{attr} \mathrel{+}= w * attribute\,(c)$$ Assign the weighted average to output voxel: $$color\,(v) = sum_{attr}\,/\,sum_w$$ The weight function can be defined as any function of the Euclidean distance between the position of point c and the center of voxel v. For example, the Gaussian function can be used: $$weight(c) = exp\left(-\frac{distance(c,v)^2}{2\sigma^2}\right) \qquad (4)$$ |
| The σ parameter of the Gaussian function controls the bandwidth. Choosing the right value for this parameter is application specific. E.g., σ = 1. |

It should be noted that with a Gaussian weight function like the one given in Equation 4, when the distance is large enough, the value of weight becomes negligible. Hence, the implementation of smooth2 operator can be optimized by reducing the search area for calculating the color of each output voxel to only the neighborhood of points in the input point cloud that have non-negligible weights.

The smooth2 operator is applied to each input point cloud 1500 ($C_1$, $C_2$, ...$C_n$) separately to create a corresponding voxel grid 700 ($V_1$, $V_2$, ..., $V_n$). The voxel grids 700 are then be used to create a blended voxel grid 1200 (B) by using the method 1300 (FIG. 13), at block 1404.

Further, the attribute, such as color, of each input point cloud 1500 is compensated using the blended voxel grid 1200 to produce the output point clouds 1510, at block 1406. This will result in a new point cloud (1510) where point attributes are transformed to new values that are the result of attribute blending. The compensation uses, as input, a point cloud C 1500, and the blended voxel grid B 1200, which is the output of method 1300 (at block 1404). The output of the compensation is a corresponding point cloud T 1510, where attributes are transformed to blended values.

The operations for such blending are depicted in Table 8. The compensation changes the attribute, such as color, of each point in a point cloud by finding how much the corresponding voxels from the original and blended voxel grid have changed.

In order to avoid aliasing (as a result of the limited resolution of the voxel grid), an upsampling operator, referred to herein as "point_expand" is used. It is understood that the operator can have a different name in different embodiments. The point expand operator finds, with sub-voxel accuracy, an anti-aliased color value in the voxel grid B 1200 for an input 3D coordinate.

| Table 8 - Compensating point cloud attributes |
| --- |
| Let *V* be the voxel grid resulted from converting C using smooth2 operator $$V = smooth2\,(C)$$ For each point c in C, we assign a color value using the following algorithm: |

(continued)

| Table 8 - Compensating point cloud attributes |
|---|
| $original\_attribute = \text{point\_expand}\,(c, V)$      (5) <br><br> $blended\_attribute = \text{point\_expand}\,(c, B)$ <br><br> $compensated\_attribute\,(c) = attribute\,(c) - original\_attribute + blended\_attribute$ |
| The point expand operator is described herein. |

The operations of the point expand operator are listed in Table 9. The point expand operator is similar to the smooth2 operator. It uses the same weight function that was used by the smooth2 operator. For a point (x, y, z), the point expand operator computes a weight w based on each voxel v in the blended voxel grid B 1200. A sum of the weights based on all voxels is computed. Further, a sum of the weighted attribute value of the voxels is also computed. An attribute value r for the point is computed based on the sum of weighted attribute values and the sum of weights. In the depiction in Table 9, a ratio of the two values is computed; however, any other calculation can be performed.

| Table 9 - Point_expand operator |
|---|
| Let *V* be an input voxel grid that was created from a point cloud using smooth2 operator (see Table 7) <br> Let c be any input 3D coordinate (x, *y, z*) <br> Compute and assign attribute r to the input point coordinates c: <br><br> $$sum_w = 0$$ <br> $$sum_{attr} = (0,0,0)$$ <br> For each voxel v in the input voxel grid V <br> $$w = \text{weight}\,(v)$$ <br> $$sum_w \mathrel{+}= w$$ <br> $$sum_{attr} \mathrel{+}= w * \text{attribute}\,(v)$$ <br> Assign the weighted average of the attribute vectors as output: <br> $$r = sum_{attr}\,/\,sum_w$$ <br> The same weight function that was used to create V from a point cloud (for example equation 5 from Table 7) is used here. |

By applying the smooth2 and the point expand operators, attribute value of each point in the input point cloud 1500 is compensated, i.e., blended, according to the blended voxel grid B 1200. The point cloud T 1510 that is output stores the blended attribute values, at 1408.

The results of multi-band color blending on 3D point clouds are facilitate minimizing the variance in color and lighting between images without introducing any noticeable artifacts at transition boundaries.

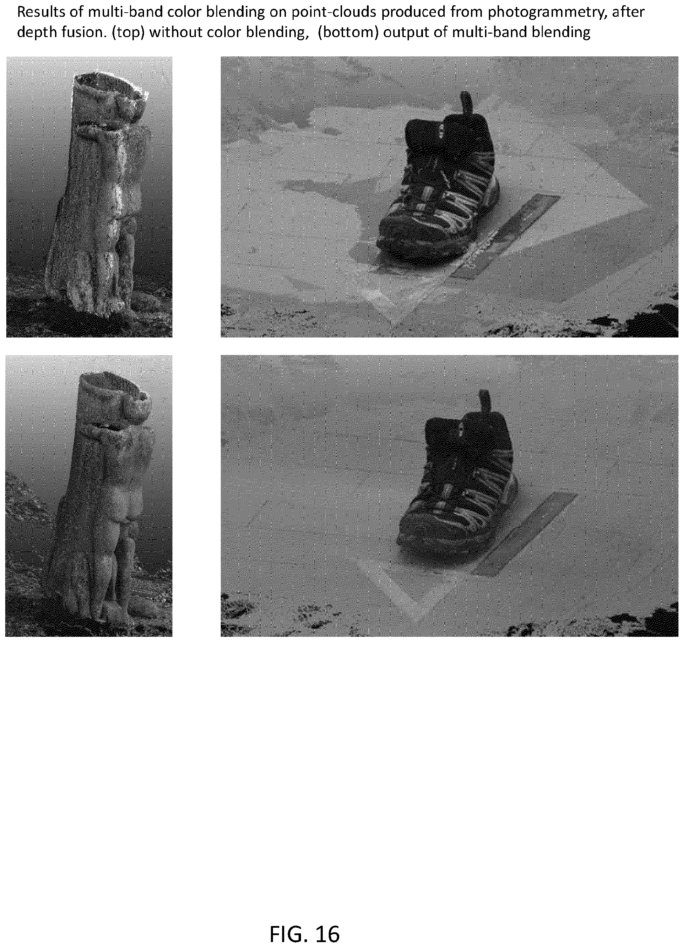

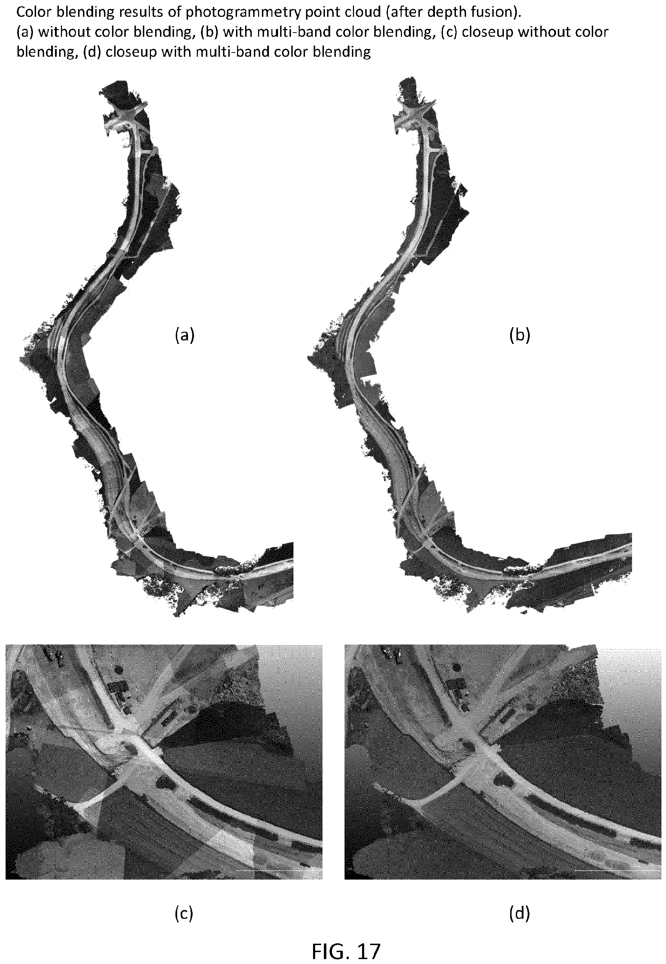

FIGS. 16 and 17 depict examples of multi-band blending of the color attribute output according to one or more embodiments. Embodiments of the technical solutions described herein provide blending attributes, such as color, of 3D data (voxel grids or point clouds) using multi-band blending. The results exhibit minimizing variations of the attributes without introducing artifacts at transition boundaries. The technical solutions described herein can be used with 3D point clouds captured by 3D measuring devices, regardless of the source of data capture. For example, the 3D point clouds can be captured directly by a 3D measuring device, such as laser scanners. Alternatively, or in addition, the 3D point clouds can be from a photogrammetry pipeline, in which depth maps that are produced as a result of dense matching are converted to point clouds. The compensated point clouds are then fed into the depth fusion in one or more embodiments.

Technical solutions described herein can also be used for blending photo camera images that are used for coloring laser scans. This can be applied to both the internal camera of the laser scanner and to images captured with an external camera. For this application, for each photo, a point cloud is generated. 3D Point coordinates come from the laser scanner, and point colors come from the corresponding photo(s). The point clouds are fed into the multi-band color blending method(s) described herein. The color blended point clouds that are output are merged to produce a single output.

Terms such as processor, controller, computer, DSP, FPGA are understood in this document to mean a computing device that may be located within an instrument, distributed in multiple elements throughout an instrument, or placed external to an instrument.

While the invention has been described in detail in connection with only a limited number of embodiments, it should be readily understood that the invention is not limited to such disclosed embodiments. Rather, the invention can be modified to incorporate any number of variations, alterations, substitutions, or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description but is only limited by the scope of the appended claims.

Also provided are the following technology aspects:

1. A system comprising:

a three-dimensional (3D) measurement device that captures a plurality three-dimensional (3D) coordinates corresponding to one or more objects scanned in a surrounding environment;

a sensor that captures attribute information of the one or more objects scanned in the surrounding environment;

one or more processors that map the attribute information from the sensor with the 3D coordinates from the 3D measurement device, wherein the mapping comprises blending the attribute information to avoid boundary transition effects, the blending comprising:

representing the 3D coordinates that are captured using a plurality of voxel grids;

converting the plurality of voxel grids to a corresponding plurality of multi-band pyramids, wherein each multi-band pyramid comprises a plurality of levels, each level storing attribute information for a different frequency band;

computing a blended multi-band pyramid based on the plurality of voxel grids by combining corresponding levels from each of the multi-band pyramids;

converting the blended multi-band pyramid into a blended voxel grid; and

outputting the blended voxel grid;

wherein the sensor is a camera that captures an image of the surrounding environment, the image captures, as the attribute information, color information of the one or more objects scanned in the surrounding environment; and

wherein the camera is mounted on the 3D measurement device at a predetermined position.

2. A computer program product comprising a memory device with computer executable instructions stored thereon, the computer executable instructions when executed by one or more processors cause the one or more processors to perform a method comprising:

capturing, by a 3D measurement device, three-dimensional (3D) coordinates corresponding to one or more objects in a surrounding environment;

capturing, by a sensor, attribute information of the one or more objects in the surrounding environment;

mapping, by one or more processors, the attribute information from the sensor with the 3D coordinates from the 3D measurement device, wherein the mapping comprises blending the attribute information to avoid boundary transition effects, the blending comprising:

representing the 3D coordinates that are captured using a plurality of voxel grids;

converting the plurality of voxel grids to a corresponding plurality of multi-band pyramids, wherein each multi-band pyramid comprises a plurality of levels, each level storing attribute information for a different frequency band;

computing a blended multi-band pyramid based on the plurality of voxel grids by combining corresponding levels from each of the multi-band pyramids;

converting the blended multi-band pyramid into a blended voxel grid; and

outputting the blended voxel grid.

3. The computer program product of aspect 2, wherein the sensor is a camera that captures an image of the surrounding environment, the image captures, as the attribute information, color information of the one or more objects scanned in the surrounding environment.

4. The computer program product of aspect 3, wherein combining the corresponding levels from each of the multi-band pyramids comprises performing a weighted averaging.

5. The computer program product of aspect 3, wherein the 3D coordinates are input as input point clouds, and wherein representing the 3D coordinates as a plurality of voxel grids comprises converting the input point clouds into corresponding voxel grids, and wherein the blended voxel grid is further used to generate output point clouds corresponding to the input point clouds respectively.

6. The computer program product of aspect 5, wherein generating an output point cloud corresponding to an input point cloud comprises:
for each point in the input cloud:

computing a sum of weighted attributes based on each voxel in the blended voxel grid;

computing a sum of weights associated with each voxel in the blended voxel grid; and

computing and assigning a blended attribute value based on the sum of weights and the sum of weighted attributes.

7. The computer program product of aspect 6, wherein the weights associated with the voxels in the blended voxel grid are computed for a point in the input point cloud based on a distance of said point from the voxels respectively.

**Claims**

1. A system comprising:

a three-dimensional (3D) measurement device that captures a plurality three-dimensional (3D) coordinates corresponding to one or more objects scanned in a surrounding environment;
a sensor that captures attribute information of the one or more objects scanned in the surrounding environment;
one or more processors that map the attribute information from the sensor with the 3D coordinates from the 3D measurement device, wherein the mapping comprises blending the attribute information to avoid boundary transition effects, the blending comprising:

representing the 3D coordinates that are captured using a plurality of voxel grids;
converting the plurality of voxel grids to a corresponding plurality of multi-band pyramids, wherein each multi-band pyramid comprises a plurality of levels, each level storing attribute information for a different frequency band;
computing a blended multi-band pyramid based on the plurality of voxel grids by combining corresponding levels from each of the multi-band pyramids;
converting the blended multi-band pyramid into a blended voxel grid; and

outputting the blended voxel grid.

2. The system of claim 1, wherein the sensor is a camera that captures an image of the surrounding environment, the image represents, as the attribute information, color information of the one or more objects scanned in the surrounding environment.

3. The system of claim 1, wherein combining the corresponding levels from each of the multi-band pyramids comprises performing a weighted averaging.

4. The system of claim 1, wherein the 3D coordinates are input as input point clouds, and wherein representing the 3D coordinates as a plurality of voxel grids comprises converting the input point clouds into corresponding voxel grids.

5. The system of claim 4, wherein the blended voxel grid is further used to generate output point clouds corresponding to the input point clouds respectively.

6. The system of claim 5, wherein generating an output point cloud corresponding to an input point cloud comprises: for each point in the input cloud:

computing a sum of weighted attributes based on each voxel in the blended voxel grid;
computing a sum of weights associated with each voxel in the blended voxel grid; and
computing and assigning a blended attribute value based on the sum of weights and the sum of weighted attributes.

7. The system of claim 6, wherein the weights associated with the voxels in the blended voxel grid are computed for a point in the input point cloud based on a distance of said point from the voxels respectively.

8. The system of claim 1, wherein the one or more processors are part of the 3D scanner.

9. A method comprising:

capturing, by a 3D measurement device, three-dimensional (3D) coordinates corresponding to one or more objects in a surrounding environment;
capturing, by a sensor, attribute information of the one or more objects in the surrounding environment;
mapping, by one or more processors, the attribute information from the sensor with the 3D coordinates from the 3D measurement device, wherein the mapping comprises blending the attribute information to avoid boundary transition effects, the blending comprising:

representing the 3D coordinates that are captured using a plurality of voxel grids;
converting the plurality of voxel grids to a corresponding plurality of multi-band pyramids, wherein each multi-band pyramid comprises a plurality of levels, each level storing attribute information for a different frequency band;
computing a blended multi-band pyramid based on the plurality of voxel grids by combining corresponding levels from each of the multi-band pyramids;
converting the blended multi-band pyramid into a blended voxel grid; and
outputting the blended voxel grid.

10. The method of claim 9, wherein the sensor is a camera that captures an image of the surrounding environment, the image captures, as the attribute information, color information of the one or more objects scanned in the surrounding environment.

11. The method of claim 9, wherein combining the corresponding levels from each of the multi-band pyramids comprises performing a weighted averaging.

12. The method of claim 9, wherein the 3D coordinates are input as input point clouds, and wherein representing the 3D coordinates as a plurality of voxel grids comprises converting the input point clouds into corresponding voxel grids.

13. The method of claim 12, wherein the blended voxel grid is further used to generate output point clouds corresponding to the input point clouds respectively.

**14.** The method of claim 13, wherein generating an output point cloud corresponding to an input point cloud comprises:
for each point in the input cloud:

computing a sum of weighted attributes based on each voxel in the blended voxel grid;
computing a sum of weights associated with each voxel in the blended voxel grid; and
computing and assigning a blended attribute value based on the sum of weights and the sum of weighted attributes.

**15.** The method of claim 14, wherein the weights associated with the voxels in the blended voxel grid are computed for a point in the input point cloud based on a distance of said point from the voxels respectively.

FIG. 1

FIG. 2

FIG. 3

EP 4 009 079 A1

20

38

124

NVM — 142

ROM — 144

RAM — 140

148

122

Processor

Communications

146

I/O

132

Azimuth
Encoder

Azimuth
Motor
Controller

138

Zenith
Encoder — 134

Zenith
Motor
Controller

136

Camera — 66

Power Source   72

FIG. 4

200

202

Scan environment to
capture 3D coordinates

208

Acquire a color image
of environment from
each position

210

Generate 3D scan of
the environment by
mapping color images
with the point clouds
captured from several
positions

FIG. 5

600

Receive input voxel grids

602

Convert the voxel grids to corresponding multi-band pyramids

604

Blend attribute data of the multi-band pyramids

606

FIG. 6

700

702

702

FIG. 7

FIG. 8

900

For level *i, a*pply band-pass filter to voxel grid of previous level

910

Filter low frequency component from the voxel grid using the reduce operator

912

Apply expand operator to the low frequency component

914

Compute difference between the voxel grid and the output of the expand operator

916

Store the difference as data of the level *i*

920

Next level is last level?

930

NO

YES

Store the output of the reduce operator applied to the voxel grid

940

FIG. 9

*VI*
Input voxel grid
700

800

high frequency          low frequency

$L_0$
802

$G_0$

high frequency    low frequency

$L_1$
802

$G_1$

high frequency    low frequency

Output multi-
band pyramid

$L_2$
802

$G_2$

high frequency          low frequency

$L_3$
802

$L_4 = G_3$
802

FIG. 10

1100

| Store last level of input multi-band pyramid in an intermediate data structure |
1102

↓

| Apply expand operator to the intermediate data structure |
1104

↓

| Add output of the expand operator and the previous level and store in an intermediate data structure |
1106

↓

Is first level of the pyramid processed? — NO

1108

↓ YES

| Output the last intermediate data structure as the output voxel grid |
1110

FIG. 11

Multi-band pyramids
Corresponding to the
Input voxel grids
800

802

Input voxel grids
700

Output (B)
1200

1202

1210

FIG. 12

1300

Create an empty multi-band pyramid

1302

Blend corresponding levels from all the input multi-band pyramids

1304

Store result of blending all levels $k$ at level $k$ of the empty multi-band pyramid

1306

Convert the multi-band pyramid into a voxel grid that is output

1308

FIG. 13

1400

```
┌─────────────────────────────────┐
│   Convert input point clouds into│
│     corresponding voxel grids    │
└─────────────────────────────────┘
1402
                 │
                 ▼
┌─────────────────────────────────┐
│   Generate blended voxel grid    │
│        using the voxel grids     │
└─────────────────────────────────┘
1404
                 │
                 ▼
┌─────────────────────────────────┐
│  Compensate attribute values in  │
│  each point cloud based on the   │
│         blended voxel grid       │
└─────────────────────────────────┘
1406
                 │
                 ▼
┌─────────────────────────────────┐
│   Generate output point cloud    │
│  based on the compensated        │
│       attribute values           │
└─────────────────────────────────┘
1408
```

FIG. 14

Input point clouds
1500

700

800

Blending Voxel Grids

$C_1$

$V_1$

+ + + + +

$V_2$

$C_2$

↓ ↓ ↓ ↓ ↓

$B$

Output point clouds
1500

$C_1$ − $V_1$ + $B$ → $T_1$

$C_2$ − $V_2$ + $B$ → $T_2$

Pass 1: convert input
point clouds to voxel

1200

Pass 2: compensate
point colors

FIG. 15

Results of multi-band color blending on point-clouds produced from photogrammetry, after depth fusion. (top) without color blending, (bottom) output of multi-band blending

FIG. 16

Color blending results of photogrammetry point cloud (after depth fusion).
(a) without color blending, (b) with multi-band color blending, (c) closeup without color blending, (d) closeup with multi-band color blending

(a)

(b)

(c)

(d)

FIG. 17

Europäisches
Patentamt

European
Patent Office

Office européen
des brevets

# EUROPEAN SEARCH REPORT

**Application Number**

EP 21 20 9280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ye Chen ET AL: "3D Texture Mapping in Multi-view Reconstruction", Procedia Engineering, 16 July 2012 (2012-07-16), pages 2927-2931, XP055234460, DOI: 10.1016/j.proeng.2011.08.551 Retrieved from the Internet: URL:http://rd.springer.com/content/pdf/10.1007/978-3-642-33179-4_35.pdf [retrieved on 2015-12-08] * paragraph [0002] * ----- | 1-15 | INV. G01S17/89 G06T15/04 |
| X | BAUMBERG A: "Blending images for texturing 3D models", PROCEEDINGS OF THE BRITISH MACHINE VISION CONFERENCE, XX, XX, 5 September 2002 (2002-09-05), pages 404-413, XP002352035, * paragraph [02.5] * ----- | 1-15 | |
| X | XIE RENPING ET AL: "Automatic multi-image stitching for concrete bridge inspection by combining point and line features", AUTOMATION IN CONSTRUCTION, ELSEVIER, AMSTERDAM, NL, vol. 90, 14 March 2018 (2018-03-14), pages 265-280, XP085368070, ISSN: 0926-5805, DOI: 10.1016/J.AUTCON.2018.02.021 * paragraph [0002] * ----- | 1-15 | TECHNICAL FIELDS SEARCHED (IPC) G01S G06T |

-/--

The present search report has been drawn up for all claims

| Place of search | Date of completion of the search | Examiner |
|---|---|---|
| Munich | 8 April 2022 | Damp, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

## EUROPEAN SEARCH REPORT

Application Number

EP 21 20 9280

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALLENE C ET AL: "Seamless image-based texture atlases using multi-band blending",<br>19TH INTERNATIONAL CONFERENCE ON PATTERN RECOGNITION, 2008: ICPR 2008; 8 - 11 DEC. 2008, TAMPA, FLORIDA, USA, IEEE, PISCATAWAY, NJ,<br>8 December 2008 (2008-12-08), pages 1-4, XP031412506,<br>ISBN: 978-1-4244-2174-9<br>* paragraph [02.2] *<br>----- | 1-15 | |
| X | US 2017/278293 A1 (HSU STEPHEN CHARLES [US]) 28 September 2017 (2017-09-28)<br>* paragraphs [0020], [0046] - [0048] *<br>----- | 1-15 | |

TECHNICAL FIELDS SEARCHED (IPC)

The present search report has been drawn up for all claims

| Place of search | Date of completion of the search | Examiner |
|---|---|---|
| Munich | 8 April 2022 | Damp, Stephan |

EPO FORM 1503 03.82 (P04C01)

## ANNEX TO THE EUROPEAN SEARCH REPORT
## ON EUROPEAN PATENT APPLICATION NO.

**EP 21 20 9280**

This annex lists the patent family members relating to the patent documents cited in the above-mentioned European search report.
The members are as contained in the European Patent Office EDP file on
The European Patent Office is in no way liable for these particulars which are merely given for the purpose of information.

**08-04-2022**

| Patent document cited in search report | Publication date | Patent family member(s) | Publication date |
|---|---|---|---|
| US 2017278293 A1 | 28-09-2017 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63120373
- US 8705012 B